# EUROPEAN PATENT APPLICATION

(11) **EP 1 467 373 A1**
(43) Date of publication of application: **13.10.2004**
(21) Application number: 04008442.8
(22) Date of filing: 07.04.2004
(51) Int. Cl.: G11B 27/32, G11B 27/34, G11B 19/02

(54) **Method for displaying available languages supported by the content recorded on a recording medium**

(30) Priority: 07.04.2003 KR 2003021756; 02.09.2003 KR 2003061241
(71) Applicant: LG ELECTRONICS INC., Seoul 150-010 (KR)
(72) Inventor: Kim, Dae Kyu, Inchoen-si, 402-062 (KR)
(74) Representative: VOSSIUS & PARTNER

(57) **Abstract**

Methods and apparatus for displaying available languages supported by the content recorded on a recording medium can facilitate a user's selection of a preferred language to be used by the player in that all the available languages can be easily shown and a preferred language can be easily selected through a corresponding menu item. When a recording medium is loaded into a player for reproduction, the player first detects available languages supported by the content recorded on the recording medium, detects a country code or the like stored in the player, and determines the display order of the detected available languages based on the detected country code. The player then displays the available languages as individual menu items in the determined display order.

## Description

The present invention relates to a recording medium and in particular to methods and apparatus for displaying available languages supported by the content recorded on a recording medium

A recording medium capable of recording large amounts of high-quality video and audio data (e.g., digital versatile disk (DVD)) stores video content along with related audio content in multiple languages so that the recording medium may be reproduced in countries in which different languages are spoken. The audio content in each language may be recorded audio or a subtitle stored as a subpicture data stream.

When a recording medium that contains audio content in multiple languages is to be reproduced, one language needs to be selected from among the multiple languages. In a related art DVD player, the selection of a language is performed based on default audio/subtitle language information set by a manufacturer of the recording medium.

Alternatively, a user may be requested to select a preferred language, which is usually performed through a setup menu. In this case, even after a language is selected by the user and the audio or subtitle in the selected language is presented, recorded audio or a subtitle of another recording medium may be presented in a language other than the selected language.

This is because audio/subpicture streams in the same language may have different ID numbers depending on recording media. If a language, for example, Korean is selected for a recording medium and the audio/subpicture stream corresponding to the Korean language has an ID number of 3, the player sets the current audio/subtitle language ID number to 3. Subsequently, if a new recording medium is loaded into the DVD player and the audio/subpicture stream corresponding to the French language has an ID number of 3, French audio or subtitle is presented, which is not intended by the user.

To solve this problem, the player may store a code for the selected language instead of the ID number of the audio/subpicture stream corresponding to the selected language. When reproducing a recording medium, the player first examines whether the recording medium contains audio data in the language indicated by the language code. If the language code exists, the player reproduces video content of the recording medium along with an audio/subpicture stream corresponding to the language code, thereby presenting audio/subtitle in the language that was selected by the user.

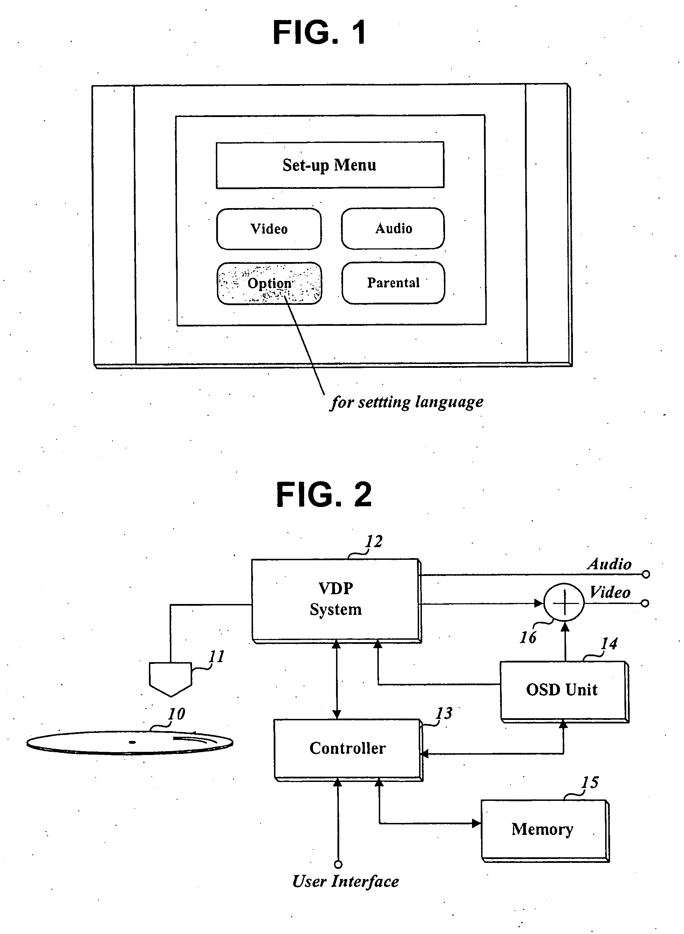

Sometimes the user may want to change the preferred language. The language change can be made through an option item in a setup menu as shown in FIG. 1 or by pressing a language key on a remote control during reproduction. Each time the language key is pressed, a next available language is displayed on the screen. The process continues until the user selects a preferred language.

As described above, the related art methods and apparatus for displaying available languages for stored content have various disadvantages. The language change through the setup menu as shown in FIG. 1 might not be familiar to the user and the language change by the language key is inconvenient in that the user may not want to bother to press the language key repeatedly until a preferred language is found.

The above references are incorporated by reference herein where appropriate for appropriate teachings of additional or alternative details, features and/or technical background.

An object of the invention is to solve at least the above problems and/or disadvantages and to provide at least the advantages described hereinafter.

Another object of the present invention is to provide a method and apparatus for displaying available languages supported by the content recorded on a recording medium in such a way that all available languages are shown.

Another object of the invention is to provide a method and apparatus for displaying available languages supported by the content recorded on a recording medium in predefined order so that a user may select a preferred language.

In order to achieve at least the above objects and advantages in a whole or in part there is provided a method that can include detecting at least two languages supported by content recorded on a recording medium, generating menu items for the detected languages, a menu item corresponding to each language and the menu items configured to be individually selected, and displaying the generated menu items with a video image being reproduced from the recording medium.

To further achieve at least the above objects in a whole or in part there is provided a method for displaying languages supported by the content recorded on a recording medium reproduced by a reproducing apparatus according to the present invention that can include detecting languages supported by the content recorded on the recording medium, detecting prescribed information stored in the reproducing apparatus, and determining a display order of the detected available languages based on the detected prescribed information.

To further achieve at least the above objects in a whole or in part there is provided an apparatus according to the present invention that can include a first device in a recording/reproducing apparatus configured to detect languages supported by content recorded on a recording medium, a second device configured to detect prescribed information stored in the reproducing apparatus, and a controller configured to determine a display order of the detected languages based on the detected prescribed information.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

The invention will be described in detail with reference to the following drawings in which like reference numerals refer to like elements wherein:

FIG. 1 illustrates a diagram showing a related art setup menu image displayed by a DVD player;

FIG. 2 illustrates a diagram showing an embodiment of an optical disk reproducing apparatus in accordance with the present invention;

FIG. 3 is a flow diagram illustrating an embodiment of a method for displaying available languages supported by the content recorded on a recording medium in accordance with the present invention;

FIGS. 4a and 4b are diagrams that illustrate exemplary menu screens for selection of a preferred language in accordance with embodiments of the present invention; and

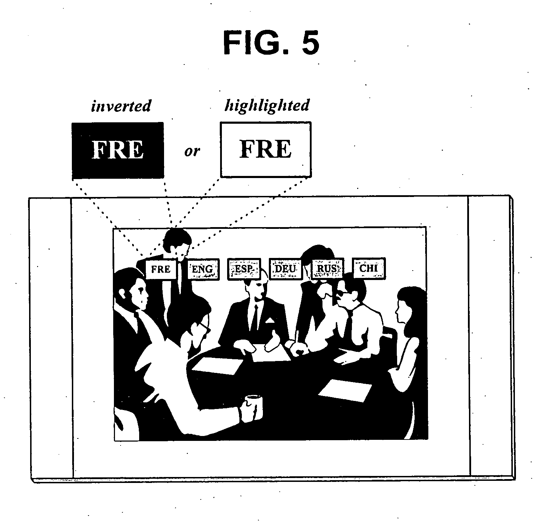

FIG. 5 is a diagram that illustrates an exemplary menu screen in which a menu item associated with a language is marked as active and visually accentuated.

FIG. 2 illustrates a schematic diagram showing an embodiment of a disk player according to the present invention. As shown in FIG. 2, the disk player can include an optical pickup 11 for reproducing recorded signals from an optical disk 10 such as a DVD and a video disk player (VDP) system 12 for converting the reproduced signal into a binary signal, retrieving digital data from the binary signal, separating the data into content data and management information, and decoding the content data to produce audio/visual (A/V) signals. A control unit 13 can decode the management information, process user input, produce menu screen components, and control overall operations of the player. An on-screen display (OSD) unit 14 can construct a menu screen from the menu screen components, a mixer 16 can mix the menu screen and video signals, and a memory 15 can store temporary data.

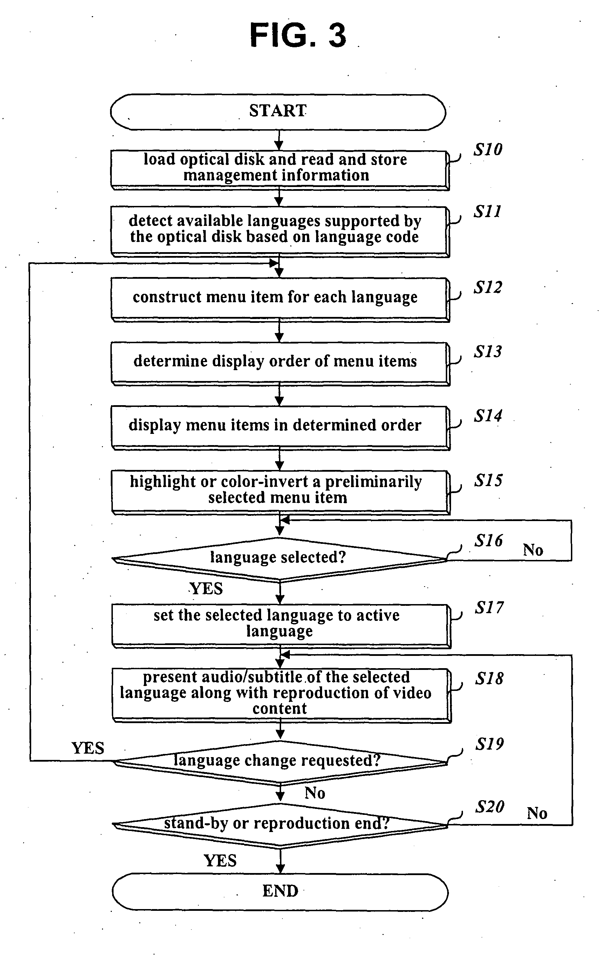

FIG. 3 is a flow diagram illustrating an embodiment of a method for displaying available languages supported by the content recorded on a recording medium in accordance with the present invention. The embodiment of Figure 3 can be applied to and will be described using the embodiment of the disk player in Figure 2. However, the present invention is not intended to be limited.

As shown in Figure 3, after a process starts, if the optical disk 10 is loaded into the disk player of FIG. 2, the control unit 13 preferably performs an initialization operation. The initialization operation can read management information recorded in a lead-in area (LIA) of the optical disk 10 and store the management information in the memory 15 temporarily (block S10).

The control unit 13 can then search the management information stored in the memory 15 for available languages supported by the content of the optical disk 10 (block S11). If the available languages are detected, the control unit 13 can construct a menu item or the like corresponding to each language (block S12). For example, a menu item may include a text indicative of the corresponding language and a box image surrounding the text. However, the present invention is not intended to be limited.

After each menu item is constructed, the control unit 13 preferably detects a country code or the like stored in an internal memory, an external ROM (not illustrated) or the like to determine the display order of the menu items (block S13). The country code is a value preset by the player manufacturer for determining the language to be used in an initial menu screen.

Once a country code is detected, the control unit 13 can give precedence of display to a menu item corresponding to the language related to the detected country code. The display order of the menu items corresponding to the other languages may be determined according to the degree of proximity of a country related to each language to the highest-priority country or the like, a number of language speakers of the additional languages in the country code country or the like, or according to predefined display order information stored in the memory. However, the present invention is not intended to be limited.

In the latter case, for example, if a predefined display order is given as English-French-Spanish-German-Russian-Chinese and the country code preset in the player is French, French takes priority over the other languages, and therefore, the display order of the languages can be given as French-English-Spanish-German-Russian-Chinese. Further, English-Spanish-German countries can be considered located closer than Russian-Chinese countries.

If the display order is determined, the display position for each menu item can be determined. Accordingly the menu items can be sequentially transmitted to the OSD unit 14 along with their positions. The display positions may be determined in such a way that the menu items are displayed, for example, from left to right or from top to bottom on the screen in order of display precedence.

Receiving the menu items, the OSD unit 14 can output the menu items to the mixer 16 according to their positions so that the menu items are displayed on the screen in the predefined display order (block S14). If the video content is being reproduced from the optical disk 10, the menu items are preferably displayed on a main video image as a background. Otherwise, the menu items can be displayed on a blank screen. The menu items can be displayed in the setup menu in the same manner.

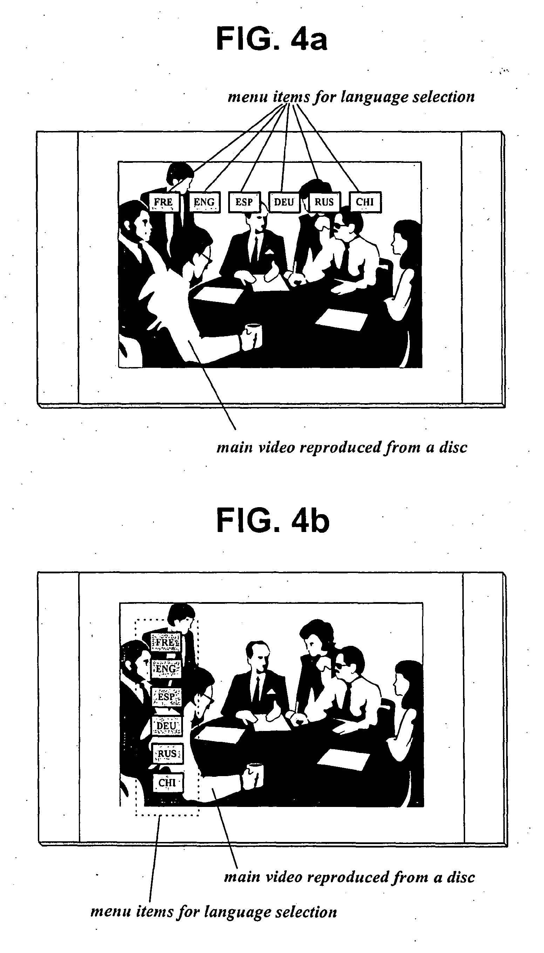

FIGS. 4a and 4b are diagrams that illustrate exemplary menu screens constructed as described above. In FIG. 4a, the menu items are displayed from left to right in the predefined order and in FIG. 4b, the menu items are displayed from top to bottom in the same order. Unlike the exemplary menu screens shown in FIG. 4a and 4b in which all the available menu items are displayed simultaneously, the menu items may be displayed one by one each time the language key is pressed.

While the user moves a cursor or a pointer over the menu items on the screen to select a menu item, the control unit 13 preferably highlights or inverts the color of a menu item on which the cursor or the pointer is currently positioned, as shown in FIG. 15 (block S15). Such a highlight or color inversion of a menu can be made by transmitting a highlighted or color-inverted text and a highlighted or color-inverted box image to the OSD unit 14. The highlighted or color-inverted menu item is preferably marked as active.

If an enter key is pressed while a menu item is marked as active, the menu item can be selected (block S16). The language code corresponding to the selected menu item is preferably designated as an active language code (block S17).

The control unit 13 can designate the number of the audio/subpicture stream corresponding to the language code as a temporary stream number and transmits the temporary stream number to the VDP system 13. If the video content of the optical disk 10 is being reproduced, the VDP system 13 can decode the audio/subpicture stream identified by the stream number and the video content simultaneously. If the video content is not being reproduced, the VDP system 13 can store the received temporary stream number for future use. Thus, the video content recorded on the optical disk 10 can be presented along with audio or a subtitle in the language selected by the user (block S18).

If the user presses the language key to change the preferred language while the optical disk 10 is being reproduced or in a stand-by state (block S19), the control unit 13 can reconstruct the menu items based on the information about the available languages (block S12), determine the display order of the menu items (block S13), and display the reconstructed menu items in the determined display order (block S14) in a similar manner as was described above. If a menu item is selected by the user, the language code corresponding to the menu item is designated as an active language code (block S17).

As described above, preferred embodiments of the present invention have various advantages. Preferred embodiments of the present invention can provide methods and apparatus for displaying available languages supported by the content recorded on a recording medium that facilitates a user's selection of a preferred language (e.g., subtitle) in a reproducing apparatus such as an optical reproducing apparatus.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. A method, comprising:
detecting at least two languages supported by content recorded on a recording medium;
generating menu items for the detected languages, a menu item corresponding to each language and the menu items configured to be individually selected; and
displaying the generated menu items with a video image being reproduced from the recording medium.

2. The method of claim 1, wherein a selected language is highlighted by a visual indication.

3. The method of claim 1 or 2, wherein said detecting detects all languages supported by the content recorded on the recording medium.

4. The method of claim 3, wherein each of said detected languages is provided by an audio stream, subtitle or a subpicture stream of the language.

5. The method of claim 1, wherein said detecting detects said languages based on language codes recorded on said recording medium.

6. The method of any of claims 1 to 5, wherein said displaying determines a display order of said generated menu items based on a country code stored in a reproducing apparatus and displays said menu items in the determined display order.

7. The method of claim 7, wherein said displaying gives the highest display priority to a menu item for the language corresponding to said country code.

8. The method of claim 7, wherein remaining languages are displayed in an order according to a prescribed relationship to the country corresponding to the country code.

9. The method of claim 8, wherein the prescribed relationship is based on proximity.

10. The method of claim 7, wherein said displaying displays the menu item having the highest display priority at the leftmost or uppermost position in an area in which said menu items will be displayed.

11. The method of any of claims 1 to 10, further comprising:
selecting one menu item from among the displayed menu items and setting the language code corresponding to the selected menu item; and
decoding at least one of an audio stream and a subpicture stream having a stream number corresponding to the set language code along with a video stream from said recording medium.

12. A method for displaying languages supported by the content recorded on a recording medium reproduced by a reproducing apparatus, comprising:
detecting languages supported by the content recorded on the recording medium;
detecting prescribed information stored in said reproducing apparatus; and
determining a display order of the detected available languages based on the detected prescribed information.

13. The method of claim 12, wherein each of said available languages is provided by an audio stream, subtitle or a subpicture stream of the language.

14. The method of claim 12 or 13, wherein the prescribed information is a country code.

15. The method of claim 14, wherein said determining gives the highest display priority to a menu item for the language corresponding to said country code.

16. The method of claim 15, wherein remaining languages are displayed in an order according to a prescribed relationship to the country corresponding to the country code.

17. The method of any of claims 12 to 16, further comprising displaying names of said - languages in the determined display order.

18. The method of claim 17, wherein the names of said languages are displayed as individual menu items on a main video image being reproduced from said recording medium.

19. The method of claim 17, wherein the names of said available languages are displayed as individual menu items on a blank screen or a setup menu.

20. The method of claim 17, wherein said displaying displays all the detected available languages simultaneously or individually in succession.

21. The method of claim 17, wherein said displaying displays a preliminarily selected name in a visually accentuating manner compared to non-selected names.

22. An apparatus, comprising:
a first device in a recording/reproducing apparatus configured to detect languages supported by content recorded on a recording medium;
a second device configured to detect prescribed information stored in said reproducing apparatus; and
a controller configured to determine a display order of the detected languages based on the detected prescribed information.

23. The apparatus of claim 22, wherein the prescribed information is a country code.

24. The apparatus of claim 23, comprising a display configured to display names of said detected languages in a prescribed display order, and wherein the names of said detected languages are displayed as individual menu items.

25. The apparatus of claim 24, wherein the controller gives the highest display priority to a menu item for the language corresponding to said country code, and wherein remaining languages are displayed in an order according to a prescribed relationship to the country corresponding to the country code.
